Europäisches Patentamt

European Patent Office

Office européen des brevets

(11) Numéro de publication : **0 057 805**
**B1**

(12) **FASCICULE DE BREVET EUROPÉEN**

(45) Date de publication du fascicule du brevet :
22.10.86

(21) Numéro de dépôt : 81810486.1

(22) Date de dépôt : 09.12.81

(51) Int. Cl.⁴ : **G 02 F 1/133**, G 04 G 9/00,
G 06 F 3/14

(54) Dispositif d'affichage électro-optique à matrice de points.

(30) Priorité : 09.02.81 CH 828/81

(43) Date de publication de la demande :
18.08.82 Bulletin 82/33

(45) Mention de la délivrance du brevet :
22.10.86 Bulletin 86/43

(84) Etats contractants désignés :
**DE FR GB IT NL**

(56) Documents cités :
GB-A- 2 001 794
GB-A- 2 008 304
GB-A- 2 050 033
US-A- 3 551 026
US-A- 3 833 287
US-A- 3 918 796
SID DIGEST, vol. 9, 18-20 avril 1978, San Francisco
(US), E. KANEKO et al.: "Liquid crystal television
display", pages 92-93

(73) Titulaire : **ASULAB S.A.**
**Faubourg du Lac 6**
**CH-2502 Bienne (CH)**

(72) Inventeur : **Gharadjedaghi, Fereydoun**
**Port-Roulant 12**
**CH-2000 Neuchatel (CH)**
Inventeur : **Guyenet, Jean-Francois**
**Culat 13**
**CH-1896 Vouvry (CH)**

(74) Mandataire : **Gresset, Jean et al**
**SMH Société Suisse de Microélectronique et d'Horlogerie S.A. Département Brevets et Licences 6, Faubourg du Lac**
**CH-2501 Bienne (CH)**

Jouve, 18, rue St-Denis, 75001 Paris, France

**0 057 805**

## Description

La présente invention concerne les dispositifs d'affichage électro-optique et plus particulièrement, un dispositif d'affichage utilisant une cellule à matrice de points et des moyens pour générer des signaux de commande. Cette cellule comprend une couche d'un matériau susceptible de répondre à l'application d'un champ magnétique par une modification de son comportement optique. Ce matériau est, de préférence, un mélange de cristaux liquides, ce mélange pouvant contenir un composé dichroïque. On pourrait aussi utiliser un matériau électroluminescent. Cette couche est placée entre deux réseaux d'électrodes. Lesdits réseaux d'électrodes sont conformés et disposés l'un par rapport à l'autre de telle sorte que l'ensemble des zones, où une électrode d'un réseau se projette sur une électrode de l'autre réseau définit les points d'une matrice comportant n lignes et m colonnes. Les moyens pour générer des signaux de commande comportent un circuit pour produire p + 1 signaux périodiques distincts. Ces signaux sont choisis de manière que leur différence de potentiel deux à deux ait une valeur efficace telle qu'en les appliquant respectivement à une électrode du premier réseau et à une électrode du deuxième réseau, ils génèrent un champ modifiant le comportement optique de la couche de matériau électro-optique. Les moyens pour générer des signaux de commande comportent en outre des moyens pour appliquer en permanence un des signaux à chacune des électrodes du premier réseau et pour appliquer sélectivement un des signaux à chacune des électrodes du deuxième réseau. De la sorte, le matériau prend son premier état optique en chaque point situé au croisement d'une électrode du premier réseau et d'une électrode du deuxième réseau auxquelles le même signal est appliqué et son deuxième état optique en chacun des autres points.

L'invention est notamment applicable aux pièces d'horlogerie utilisant un tel dispositif d'affichage à matrice de points.

Selon l'état actuel de la technique, les cellules à matrice de points utilisant des cristaux liquides sont généralement commandées de façon séquentielle (multiplexage). Or, une telle commande séquentielle n'est applicable qu'aux cellules mettant en œuvre un phénomène électro-optique à seuil.

On sait que les cellules d'affichage à cristal liquide du type nématique tordu, telles que celles qui sont décrites dans le brevet US-A-3 918 796, mettent en œuvre un phénomène électro-optique à seuil. En revanche, les cellules utilisant un cristal liquide contenant un composé dichroïque, telles que celles qui sont décrites dans les brevets US-A-3 551 026 et US-A-2 833 287, mettent en œuvre un phénomène électro-optique ne présentant pas de seuil net. Il en résulte que de telles cellules nécessitent pour leur commande un grand nombre de bornes de sorties rendant leur prix de revient prohibitif et augmentant excessivement leurs dimensions.

De plus, même lorsqu'elle est applicable, la commande séquentielle d'une cellule d'affichage à cristal liquide entraîne une détérioration du contraste de l'affichage ainsi qu'une réduction de l'angle de lecture de cette cellule.

Dans le but de supprimer ces inconvénients, on a déjà proposé (GB-A-2 001 794) un dispositif d'affichage comprenant une cellule à matrice de points dans laquelle chaque ensemble d'électrodes est formé par un réseau de bandes électro-conductrices parallèles entre elles, les électrodes d'un ensemble étant orthogonales à celles de l'autre ensemble.

Ce dispositif d'affichage connu est équipé d'un dispositif de commande d'un type dénommé ci-après périodique non multiplexé. Les dispositifs de commande de ce type comprennent un circuit permettant d'engendrer au moins n + 1 signaux périodiques différents, n étant le nombre d'électrodes d'un premier ensemble de la cellule d'affichage. Ces signaux doivent être tels que la valeur efficace (c'est-à-dire la racine carrée de la valeur moyenne du carré) de la différence de potentiel entre deux signaux différents soit supérieure ou égale à la tension électrique minimale nécessaire pour créer un effet électro-optique dans le matériau sensible de la cellule.

Chacun des n premiers signaux est appliqué sur une électrode respective du premier ensemble, et on applique sur chacune des électrodes du second ensemble associées aux colonnes de la matrice un signal sélectionné parmi les signaux décrits ci-dessus, cette sélection étant faite en fonction d'un signal de commande caractéristique de l'information devant être affichée par la cellule.

Cependant, dans le dispositif d'affichage connu, chaque colonne de la matrice est associée à une seule électrode du deuxième ensemble. Il en résulte que cette cellule connue ne permet d'afficher que des figures représentables par la différenciation d'un seul point au plus de chaque colonne de la matrice. En conséquence, ce dispositif d'affichage connu ne permet pas l'affichage de signes nécessitant la différenciation de plusieurs points de chaque colonne, et notamment l'affichage de caractères alpha-numériques.

On connaît par ailleurs (SID 1978 DIGEST, pages 92 et 93, article intitulé « Liquid crystal television display ») une cellule d'affichage à matrice de points ayant une configuration d'électrodes telle que chaque colonne de la matrice d'affichage est associée à deux électrodes du second réseau. Néanmoins, cette configuration particulière des électrodes n'a été proposée que dans le but de réduire le degré de multiplexage de la commande de cette cellule d'affichage.

La présente invention a notamment pour but de proposer un dispositif d'affichage à matrice de points capable d'afficher des figures, telles que des caractères alpha-numériques, qui nécessitent la différenciation de plus d'un point par colonne de la matrice. En outre, ce dispositif doit permettre l'utilisation d'un phénomène électro-optique ne présentant pas de seuil net.

En particulier, un objet de la présente invention est de proposer un dispositif d'affichage à matrice de points utilisant une cellule d'affichage dont le matériau sensible est un cristal liquide comprenant un composé dichroïque.

Un autre objet de la présente invention est de réaliser un dispositif d'affichage offrant un excellent contraste ainsi qu'un angle de lecture relativement grand.

La demanderesse a trouvé que, de façon surprenante, ces buts pouvaient être atteints en utilisant une cellule d'affichage telle que définie précédemment et dans laquelle le premier réseau d'électrodes comprend n/2 électrodes, n/2 étant égal à p et dans laquelle, de plus, le deuxième réseau d'électrodes comprend 2m électrodes regroupées par paires. Les électrodes de chaque paire sont conformées de manière qu'elles forment, en regard de chacune des électrodes du premier réseau, deux aires conductrices situées à la suite l'une de l'autre dans le sens de la colonne.

En associant chaque colonne de la matrice à plusieurs électrodes du deuxième réseau, on rend possible l'utilisation d'un dispositif de commande du type périodique non multiplexé pour l'affichage de caractères alpha-numériques ou de tout autre signe nécessitant la différenciation de plusieurs points par colonne de la matrice.

On rend ainsi possible l'affichage de tels signes par une cellule à cristal liquide contenant des composés dichroïques. De plus, la commande de la cellule n'étant pas multiplexée, on évite la réduction de l'angle de lecture due au multiplexage.

En outre, la demanderesse a constaté que chacune des lettres de l'alphabet romain, et chaque chiffre arabe ou romain peut être affiché à l'aide d'une matrice de points en ne différenciant, au maximum, que deux points par colonne. Il suffit pour cela d'incliner, par rapport aux colonnes de la matrice, lesdites lettres ou lesdits chiffres. En d'autres termes, il suffit de disposer les lettres ou chiffres selon ce que l'on appelle habituellement une écriture penchée. Il est ainsi possible d'utiliser le principe de la présente invention à l'aide d'ensembles d'électrodes dont l'un est composé de paires d'électrodes en forme de peigne imbriquées l'une dans l'autre.

Les caractéristiques et avantages de l'invention seront mieux compris à la lecture de la description qui va suivre de plusieurs mode de réalisation de l'invention, description faite en référence aux dessins annexés dans lesquels :

La figure 1 est un schéma synoptique d'un système électronique d'une montre utilisant un dispositif d'affichage selon un mode de réalisation de l'invention ;

La figure 2a est un schéma électrique d'un exemple de réalisation de l'un des circuits du système de la figure 1 ;

La figure 2b est un schéma électrique d'un exemple de réalisation d'un autre circuit du système de la figure 1 ;

Les figures 3a à 3f représentent, en correspondance temporelle, les diagrammes de signaux apparaissant sur les bornes du circuit de la figure 2a ;

La figure 4 est une coupe transversale à travers une cellule d'affichage utilisable dans le système représenté sur la figure 1 ;

La figure 5 est une vue partielle schématique en plan de la cellule d'affichage de la figure 4, montrant une disposition des électrodes d'un ensemble, selon un premier mode de réalisation ;

La figure 6 est une vue analogue à la figure 5 montrant un autre mode de réalisation de la disposition desdites électrodes ; et

La figure 7 est une vue schématique en plan d'une cellule d'affichage selon l'invention, affichant la lettre C.

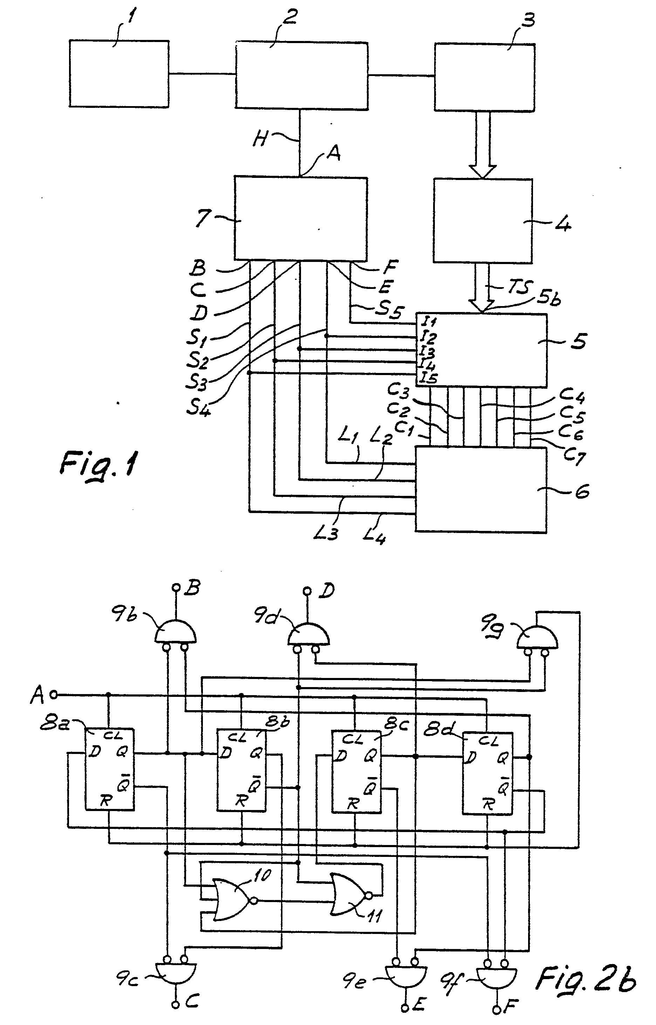

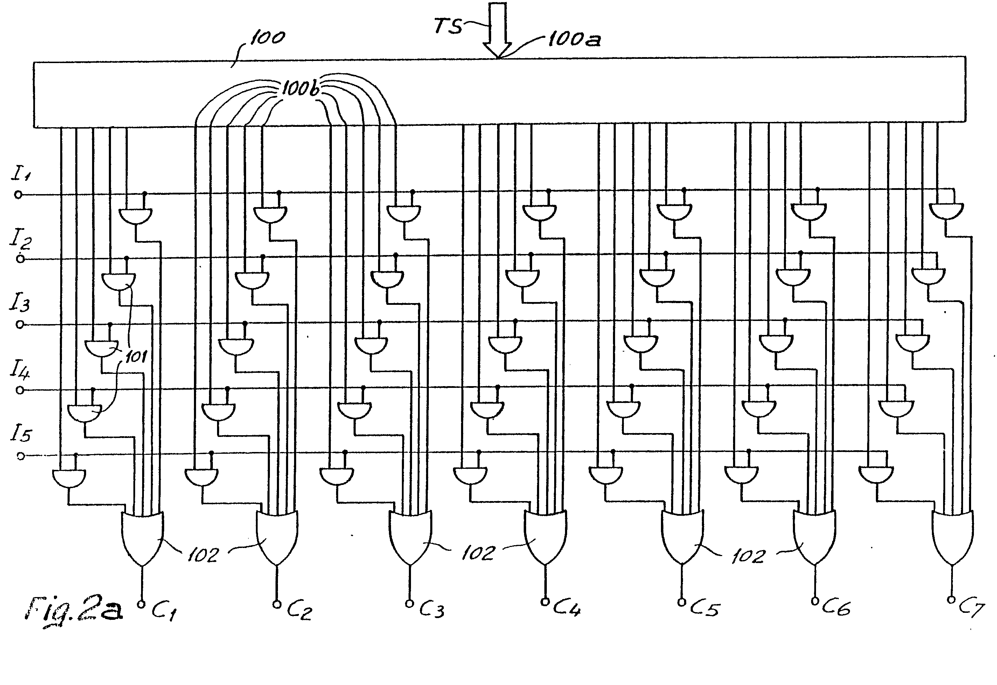

Le système représenté sur la figure 1 comprend une base de temps telle qu'un oscillateur à quartz 1, un circuit diviseur 2 divisant le signal de base de temps de haute fréquence fourni par le circuit 1 et fournissant un signal de base de temps de basse fréquence, des compteurs horaires 3 recevant le signal de base de temps de basse fréquence et fournissant des signaux numériques représentant des informations horaires, ainsi qu'un circuit sélecteur de fonctions 4 sélectionnant certains desdits signaux d'information horaire et appliquant lesdits signaux sélectionnés sur l'entrée d'un circuit décodeur de colonne 5 dont le fonctionnement sera expliqué plus en détail ci-dessous.

Le système représenté sur la figure 1 comprend, en outre, une cellule d'affichage à matrice de points 6 qui, pour simplification du dessin, n'a que quatre électrodes de lignes reliés aux conducteurs L1 à L4 et sept électrodes de colonne reliés aux conducteurs C1 à C7.

Pour la commande de cette cellule on utilise un circuit générateur de signaux 7 ayant une entrée d'horloge A qui est reliée à une sortie d'un étage de division intermédiaire du circuit diviseur 2, sortie délivrant un signal d'horloge H. Le circuit générateur 7 comporte, dans le cas présent, 4 + 1 = 5 sorties B, C, D, E, F. Le circuit 7 est agencé pour répondre au signal d'horloge H qui est appliqué sur son entrée A, en fournissant cinq signaux S1 à S5. Chacun des quatre premiers signaux S1 à S4 est appliqué sur une électrode de ligne respective du dispositif d'affichage 6.

Le décodeur de colonnes 5 comporte cinq entrées de signaux I1 à I5 recevant chacune un signal respectif S1 à S5. Le décodeur de colonnes 5 comporte en outre des entrées d'informations horaires 5b recevant une ou plusieurs informations horaires TS sélectionnées par l'utilisateur de la montre au moyen

3

du sélecteur de fonctions 4.

Le décodeur de colonnes 5 est agencé pour appliquer sur chacune des électrodes de colonnes du dispositif d'affichage 6 un signal choisi parmi les signaux S1 à S5 en fonction desdites informations horaires TS reçues sur les entrées 5b. Le circuit 5 peut être constitué par une mémoire morte préprogrammée 100 (figure 2a) dont les entrées 100a qui constituent les entrées 5b du circuit 5, reçoivent les signaux porteurs d'informations horaires TS présentés sous forme binaire transmis par le circuit 4. La mémoire morte 100 comporte, dans le cas présent, 35 sorties 100b reliées chacune directement à une entrée d'une porte ET 101 respective d'une matrice de portes ET. Ces portes ET sont connectées par une de leurs entrées aux bornes I1 à I5 et, par leur sortie, via des portes OU 102, aux conducteurs C1 à C7, comme cela est représenté sur la figure 2a.

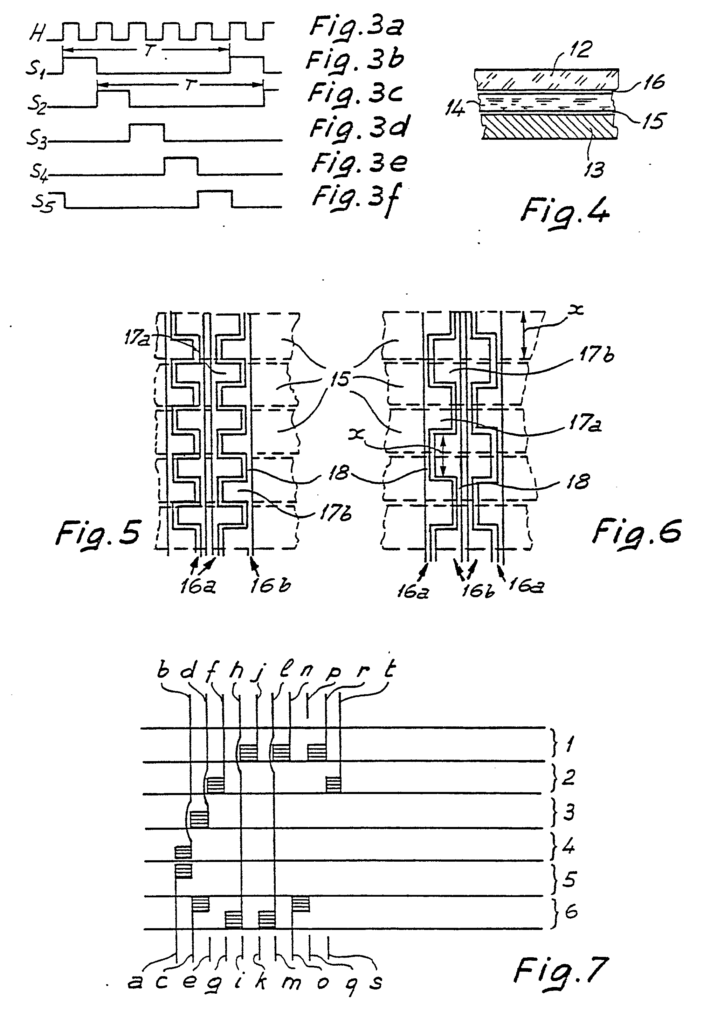

Selon l'exemple représenté sur les figures 3b à 3f, les signaux de référence S1 à S5 sont constitués par des suites périodiques d'impulsions rectangulaires, ces suites étant déphasées les unes des autres de 2π/5. Les signaux S1 à S5 ont tous une même période T et sont composés d'impulsions rectangulaires de durée égale à T/5. Un tel ensemble de signaux peut être fourni par le circuit de la figure 2b. Ce circuit comprend quatre bascules de type D, 8a à 8d, dont les entrées d'horloge CL sont reliées à l'entrée A du circuit 7. Le circuit de la figure 2a comporte, en outre, cinq portes ET, 9b à 9f, dont les sorties sont reliées respectivement aux sorties B à F de ce circuit, et une sixième porte ET, 9g dont la sortie est reliée aux entrées de remise à zéro R des bascules 8a à 8d. Chacune des portes ET, 9b à 9g comporte deux entrées inverseuses reliées à des sorties Q ou $\bar{Q}$ de bascules 8a à 8d conformément au tableau 1 ci-dessous

Tableau 1

| Porte ET | 1ère entrée | 2ème entrée |
|---|---|---|
| 9b | Q de 8d | Q de 8a |
| 9c | $\bar{Q}$ de 8a | Q de 8b |
| 9d | $\bar{Q}$ de 8b | Q de 8c |
| 9e | $\bar{Q}$ de 8c | Q de 8d |
| 9f | $\bar{Q}$ de 8a | $\bar{Q}$ de 8d |
| 9g | Q de 8a | $\bar{Q}$ de 8b |

De plus, l'entrée D de la bascule respectivement 8b et 8d est reliée à la sortie Q de la bascule respectivement 8a et 8c ; l'entrée D de la bascule 8a est reliée à la sortie $\bar{Q}$ de la bascule 8d ; et l'entrée D de la bascule 8c est reliée à la sortie $\bar{Q}$ de la bascule 8b par l'intermédiaire d'un circuit comportant deux portes NON-OU 10 et 11.

Lorsque le signal d'horloge H représenté sur la figure 3a est appliqué sur l'entrée A du circuit 7 (figure 1), les signaux de référence S1 à S5 apparaissent respectivement sur les sorties B à F de ce circuit 7.

Selon l'exemple représenté sur la figure 4, la cellule d'affichage 6 comprend une plaque avant 12 transparente, une plaque arrière 13 et une couche de cristal liquide 14 interposée entre lesdites plaques 12 et 13. La couche de cristal liquide 14 contient un composé dichroïque. Un premier réseau d'électrodes en forme de bandes parallèles 15 de même largeur est déposé sur la face interne de la plaque arrière 13 ; la plaque avant 12 porte sur sa face interne un second réseau d'électrodes 16$_a$, 16$_b$ parallèles entre elles et orthogonales aux électrodes 15 de la plaque arrière 13. Les électrodes du second réseau sont groupées par paires d'électrodes 16$_a$ et 16$_b$, ces deux électrodes étant imbriquées géométriquement l'une dans l'autre comme décrit ci-dessous.

Comme on peut le voir sur les figures 5 et 6 représentant deux configurations d'électrodes préférées, chacune des électrodes 16$_a$, 16$_b$ du second réseau est constituée par un alignement d'aires conductrices 17$_a$, 17$_b$ de forme sensiblement carrée (cas de la figure 5) ou rectangulaire (cas de la figure 6), chacune de ces aires 17$_a$, 17$_b$ étant reliée à des aires voisines par des isthmes 18 suffisamment fins pour que l'effet d'affichage qu'ils sont susceptibles de produire soit invisible à l'œil nu. Sur le dessin la largeur des isthmes 18 a été exagérée pour plus de clarté.

Les aires 17$_a$ d'une même électrode 16$_a$ sont espacées les unes des autres de façon que entre deux aires voisines, il subsiste un espace occupé par une aire 17$_b$ d'une électrode 16$_b$ voisine.

Les aires 17$_a$ et 17$_b$ ne forment qu'un seul et même alignement. Ainsi, les aires conductrices 17$_a$, 17$_b$ des électrodes du second réseau sont réparties suivant une matrice de points dont chaque colonne comprend deux électrodes 16$_a$ et 16$_b$.

Selon l'exemple de la figure 5, deux aires 17$_a$, 17$_b$ consécutives d'une même colonne se projettent entièrement sur une bande conductrice 15 commune. Selon l'exemple de la figure 6, chaque aire 17$_a$, 17$_b$ d'une colonne se projette par moitié sur une bande 15 et par moitié sur la bande 15 voisine. De plus, selon cet exemple, chaque aire conductrice 17$_a$, 17$_b$ présente, transversalement aux bandes 15, une dimension «x» sensiblement égale à la largeur desdites bandes 15.

4

Sur la figure 7 on a représenté schématiquement une cellule d'affichage à matrice de points ayant la structure de celle de la figure 5 et comportant six électrodes de lignes ou électrodes de premier réseau et vingt électrodes de colonnes ou électrodes de second réseau. Sur cette figure 7, les électrodes de lignes sont numérotées en chiffres arabes de 1 à 6, tandis que les électrodes de colonnes sont repérées chacune par une lettre minuscule de l'alphabet.

Dans le cas de l'exemple de la figure 7, on utilise un générateur de signaux analogue à celui portant la référence 7 sur la figure 1 mais pouvant fournir sept signaux périodiques différents S1 à S7, dont les six premiers signaux S1 à S6 sont appliqués, chacun, sur une électrode de lignes respectives 1 à 6.

Pour obtenir l'affichage de la lettre C comme représenté sur la figure 7, il suffit d'appliquer sur chaque électrode de colonnes ou électrodes de second réseau «a» à «t» un signal de référence convenable conformément au tableau 2 ci-dessous.

Tableau 2

| électrode de colonne | signal |
|---|---|
| a | S5 |
| b | S4 |
| c | S6 |
| d | S3 |
| e | S7 |
| f | S2 |
| g | S7 |
| h | S6 |
| i | S7 |
| j | S1 |
| k | S7 |
| l | S6 |
| m | S7 |
| n | S1 |
| o | S6 |
| p | S7 |
| q | S7 |
| r | S1 |
| s | S7 |
| t | S2 |

Les signaux S1 à S7 sont des suites périodiques d'impulsions rectangulaires ayant une période T, ces suites étant déphasées les unes des autres de $2\pi/7$, la durée de chacune des impulsions rectangulaires étant égale à T/7. Ces signaux peuvent être fournis par le circuit de référence CD 4022 B de NATIONAL SEMICONDUCTOR, Santa Clara, California.

Bien entendu les circuits représentés sur les figures 2a et 2b peuvent être chacun remplacé par tout autre circuit équivalent.

Par ailleurs, au lieu d'utiliser en tant que signaux de référence, les signaux S1 à S7 décrits ci-dessus, on pourrait utiliser d'autres types de signaux Sp pourvu que la valeur efficace V de la différence de potentiel entre deux signaux différents quelconques $S_i$ et $S_j$ soit telle que :

$$V = \sqrt{\overline{(S_i - S_j)^2}} \geqslant V_s$$

où $V_s$ est une grandeur prédéterminée égale à la différence de potentiel minimale qu'il faut appliquer entre une électrode 15 du premier réseau et une électrode $16_a$ ou $16_b$ du second réseau pour créer un effet électro-optique dans la couche de cristal liquide 14 à l'endroit où ladite électrode 15 et ladite électrode $16_a$ ou $16_b$ se croisent.

## Revendications

1. Dispositif électro-optique pour afficher une information par visualisation simultanée sélective de points d'affichage disposés aux intersections de n lignes et m colonnes d'une matrice, comportant une cellule d'affichage (6) comprenant une couche (14) d'un matériau susceptible de prendre un premier état optique en l'absence de champ électrique et un deuxième état optique en réponse à l'application d'un champ électrique ayant une valeur supérieure à une valeur déterminée, des moyens pour appliquer le champ, comprenant un premier réseau d'électrodes (15) isolées les unes des autres et s'étendant sur une des faces de ladite couche (14) dans le sens desdites lignes, et un deuxième réseau d'électrodes (16a, 16b) isolées les unes des autres et s'étendant sur l'autre face de ladite couche (14) dans le sens desdites colonnes de manière que chaque électrode (16a, 16b) dudit deuxième réseau croise chaque électrode (15) dudit premier réseau en un desdits points dans une vue en plan de la cellule (6), ledit dispositif comportant en outre des moyens (5, 7) pour appliquer auxdites électrodes (15, 16a, 16b) des signaux susceptibles de produire sélectivement en chacun desdits points ledit champ électrique en réponse à un signal de commande d'affichage (TS) comprenant un circuit (7) pour produite p + 1 signaux électriques périodiques (S1 à S5) distincts dont les différences de potentiel deux à deux ont toutes une valeur efficace telle qu'en les appliquant respectivement à une électrode du premier réseau et à une électrode du deuxième réseau, ils génèrent un champ ayant une valeur supérieure à ladite valeur déterminée, des moyens (L1 à L4) pour appliquer en permanence un desdits signaux (S1 à S5) à chacune des électrodes (15) dudit premier réseau et des moyens (5) répondant au signal de commande (TS) pour appliquer sélectivement un desdits signaux (S1 à S5) à chacune des électrodes (16a, 16b) dudit deuxième réseau de manière que ledit matériau prenne son premier état optique en chaque point situé au croisement d'une électrode du premier réseau (15) et d'une électrode du deuxième réseau (16a, 16b) auxquelles le même desdits signaux (S1 à S5) est appliqué et son deuxième état optique en chacun des autres points, caractérisé par le fait que ledit premier réseau d'électrodes comprend n/2 électrodes, que p est égal à n/2 et que ledit deuxième réseau d'électrodes comprend 2m électrodes regroupées par paires de façon qu'à chaque colonne corresponde une paire d'électrodes, les électrodes de chaque paire étant conformées de manière qu'elles forment, en regard de chacune des électrodes dudit premier réseau, deux aires conductrices situées à la suite l'une de l'autre dans le sens de ladite colonne, deux des points visualisés en même temps pour afficher l'information pouvant ainsi être situés dans la même colonne.

2. Dispositif selon la revendication 1, caractérisé par le fait que chacune des électrodes (16a, 16b) du deuxième réseau comprend n/2 aires conductrices (17a, 17b) reliées électriquement entre elles, espacées les unes des autres et disposées en regard des n/2 électrodes (15) du premier réseau, les aires conductrices (17a) de l'une des électrodes (16a) de chacune desdites paires d'électrodes (16a, 16b), sauf les extrêmes, étant disposées dans l'espace subsistant entre deux aires conductrices (17b) de l'autre électrode (16b) de ladite paire d'électrodes (16a, 16b).

3. Dispositif selon la revendication 1, caractérisé par le fait que chacune desdites aires conductrices (17a, 17b), sauf les extrêmes, est disposée en regard de deux desdites électrodes (15) du premier réseau.

## Claims

1. Electro optical device for displaying an item of information by simultaneous selective visualization of display points arranged at the intersections of n lines and m columns of a matrix, including a display cell (6) comprising a layer (14) of a material adapted to assume a first optical state in the absence of an electrical field and a second optical state in response to the application of an electrical field having a value greater than a given value, means for applying the field comprising a first network of electrodes (15) insulated from one another and extending over one of the faces of said layer (14) in the sense of said lines and a second network of electrodes (16a, 16b) insulated from one another and extending over the other face of said layer (14) in the sense of said colums in a manner such that each electrode (16a, 16b) of said second network intersects each electrode (15) of said first network in one of said points in a plan view of the cell (6), said device further including means (5, 7) for applying to said electrodes (15, 16a, 16b) signals adapted to produce selectively at each of said points said electrical field in response to a display control signal (TS) comprising a circuit (7) for producing p + 1 distinct periodic electrical signals (S1-S5) of which the potential differences two by two all have a r. m. s. value such that in applying them respectively to an electrode of the first network and an electrode of the second network they generate a field having a value greater than said given value, means (L1-L4) for permanently applying one of said signals (S1-S5) to each of the electrodes of said first network and means (5) responding to the control signal (TS) for selectively applying one of said signals (S1-S5) to each of the electrodes (16a, 16b) of said second network in a manner such that said material assumes its first optical state at each point located at the intersection of an electrode of the first network (15) and of an electrode of the second network (16a, 16b) to which the same one of said signals (S1-S5) is applied and its second optical state at each of the other points, characterized by the fact that said first network of electrodes comprises n/2 electrodes, that p is equal to n/2 and that said second network of electrodes comprises 2m electrodes amalgamated in pairs in a manner such that to each column there corresponds a pair of electrodes, the electrodes of each pair being conformed in a manner such that they from relative to each of the electrodes of the first network two conductive areas situated following one another in the sense of said column, two of the points visualized at the same time to display the information being thus able to be located in the same column.

2. Device according to claim 1, characterized by the fact that each of the electrodes (16a, 16b) of the second network comprises n/2 conductive areas (17a, 17b) electrically coupled among themselves, spaced from one another and arranged opposite the n/2 electrodes (15) of the first network, the conductive areas (17a) of one of the electrodes (16a) of each of said pairs of electrodes (16a, 16b) except for the extremities being arranged in the space subsisting between two conductive areas (17b) of the other electrode (16b) of said pair of electrodes (16a, 16b).

3. Device according to claim 1, characterized by the fact that each of said conductive areas (17a, 17b) except for the extremities is arranged opposite two of said electrodes (15) of the first network.

**Patentansprüche**

1. Elektro-optische Anordnung zum Wiedergeben einer Information durch gleichzeitige selektive Sichtbarmachung von Anzeigepunkten, in den Schnittstellen von n Zeilen und m Spalten einer Matrix angeordnet, umfassend eine Anzeigezelle (6) mit einer Schicht (14) eines Materials, das einen ersten optischen Zustand beim Fehlen elektrischen Feldes und einen zweiten optischen Zustand im Ansprechen auf das Anlegen eines elektrischen Feldes mit einem Wert oberhalb eines vorgegebenen Wertes annehmen kann, Mittel zum Anlegen des Feldes mit einem ersten Netz von voneinander isolierten Elektroden (15), das sich über die eine Seite der genannten Schicht (14) in Richtung der genannten Zeilen erstreckt und einem zweiten Netz von voneinander isolierten Elektroden (16a, 16b), das sich auf der anderen Seite der genannten Schicht (14) in Richtung der genannten Spalten derart erstreckt, daß jede Elektrode (16a, 16b) des genannten zweiten Netzes jede Elektrode (15) des genannten ersten Netzes in einem der genannten Punkte in einer Draufsicht auf die Zelle (6) kreuzt, wobei die genannte Anordnung ferner Mittel (5, 7) umfaßt zum Anlegen an die genannten Elektroden (15, 16a, 16b) von Signalen für das selektive Erzeugen des genannten elektrischen Feldes in jedem der genannten Punkte im Ansprechen auf ein Anzeigesteuersignal (TS) mit einem Schaltkreis (7) zum Erzeugen von p + 1 periodischen elektrischen getrennten Signalen (S1 bis S5), deren paarweise Potentialdifferenz jeweils einen Wirkungswert besitzt derart, daß beim Anlegen an eine Elektrode des ersten Netzes beziehungsweise eine Elektrode des zweiten Netzes sie ein Feld erzeugen mit einem Wert oberhalb des genannten vorgegebenen Wertes, Mittel (L1 bis L4) zum permanenten Anlegen eines der genannten Signale (S1 bis S5) an jede der Elektroden (15) des genannten ersten Netzes und Mittel (5), ansprechend auf Steuersignal (TS) zum selektiven Anlegen eines der genannten Signale (S1 bis S5) an jede der Elektroden (16a, 16b) des genannten zweiten Netzes derart, daß das genannte Material seinen ersten optischen Zustand in jedem Punkt annimmt, der in einer Kreuzung einer Elektrode der ersten Netzes (15) und einer Elektrode des zweiten Netzes (16a, 16b), an an denen das gleiche genannte Signal (S1 bis S5) angelegt ist, und seinen zweiten optischen Zustand in jedem anderen Punkt annimmt, dadurch gekennzeichnet, dass das genannte erste Netz von Elektroden n/2 Elektroden umfasst, dass p gleich n/2 ist und dass das genannte zweite Elektrodennetz 2m Elektroden umfasst, die paarweise derart geordnet sind, dass jede Spalte einem Elektrodenpaar entspricht, wobei die Elektroden jedes Paares derart angepasst sind, dass sie gegenüber jeder der Elektroden des genannten ersten Netzes zwei leitende Bereiche bilden, die hintereinander in Richtung der genannten Spalte liegen, wobei zwei der gleichzeitig sichtbar zu machenden Punkte für die Anzeige der Information in derselben Spalte liegen können.

2. Anordnung nach Anspruch 1, dadurch gekennzeichnet, dass jede der Elektroden (16a, 16b) des zweiten Netzes n/2 leitende Bereiche (17a, 17b) umfasst, die elektrisch miteinander verbunden sind, voneinander beabstandet sind und gegenüber den n/2 Elektroden (15) des ersten Netzes angeordnet sind, wobei die leitenden Bereiche (17a) einer der Elektroden (16a) jedes des genannten Elektrodenpaares (16a, 16b), ausser den endständigen, in dem Raum angeordnet ist, der zwischen zwei leitenden Bereichen (17b) der anderen Elektrode (16b) des genannten Elektrodenpaares (16a, 16b) angeordnet sind.

3. Anordnung nach Anspruch 1, dadurch gekennzeichnet, dass jeder der genannten leitenden Bereiche (17a, 17b) ausser den endständigen gegenüber zwei genannten Elektroden (15) des ersten Netzes angeordnet ist.

Fig.1

Fig.2b

Fig.2a

Fig.3a
Fig.3b
Fig.3c
Fig.3d
Fig.3e
Fig.3f

Fig.4

Fig.5

Fig.6

Fig.7